# EUROPÄISCHE PATENTANMELDUNG

(11) **EP 2 860 061 A2**
(43) Veröffentlichungstag der Anmeldung: **15.04.2015**
(21) Anmeldenummer: 14450045.1
(22) Anmeldetag: 09.10.2014
(51) Int. Cl.: B60M 1/23, B60M 1/24

(54) **Anordnung zur Aufhängung eines Fahrdrahtes**

(30) Priorität: 09.10.2013 AT 7762013
(71) Anmelder: Ing. Karl u. Albert Kruch GmbH & Co. KG, 1230 Wien (AT)
(72) Erfinder: Haslehner, Wolfgang, 1120 Wien (AT)
(74) Vertreter: Rippel, Andreas

(57) **Zusammenfassung**

Bei einer Anordnung zur Aufliängung eines Fahrdrahtes (1) elektrischer Bahnen mittels eines Hängerseils (2), das mittels wenigstens einer Hängeklemme (4, 6) und wenigstens einer Kausche (5, 7) den Fahrdraht (1) mit einem Tragseil (3) verbindet, ist das Hängerseil (2) zur Bildung einer Schlinge durch eine Press- oder Kerbhülse (8, 9) und die Schlinge über die Kausche (5, 7) geführt.

Zwischen der Press- oder Kerbhülse (9) und der Kausche (7) ist ein Bremsschuh (10, 20, 30) verschiebbar angeordnet, der der Kausche (7) angepasste Bremsflächen aufweist, so dass durch Verschieben des Bremsschuhs (10, 20, 30) gegen die Kausche (7) das Hängerseil (2) zwischen Kausche (7) und Bremsschuh (10, 20, 30) eingeklemmt wird.

Dadurch ist eine Installation vorläufig ohne Verpressung der Hülsen möglich.

## Beschreibung

Die Erfindung bezieht sich auf eine Anordnung zur Aufhängung eines Fahrdrahtes elektrischer Bahnen mittels eines Hängerseils, das mittels wenigstens einer Hängeklemme und wenigstens einer Kausche den Fahrdraht mit einem Tragseil verbindet, wobei das Hängerseil zur Bildung einer Schlinge durch eine Press- oder Kerbhülse und die Schlinge über die Kausche geführt ist.

Das Hängerseil verbindet das Tragseil einer Fahrleitung mechanisch und elektrisch mit dem vom Stromabnehmer beschliffenen Fahrdraht einer Fahrleitung. Die Länge des Hängerseils muss dabei für jedes Stück individuell so eingestellt werden, dass der Fahrdraht konstant in der idealen Höhe fixiert wird, um die optimale Kontaktkraft für den Pantographen der Lokomotive zu gewährleisten.

Während der Installationsphase der elektrischen Oberleitung einer elektrischen Bahn werden die Hängerseile mehrmals nachreguliert. Die Seillänge zwischen den Hängeklemmen wird dabei so verändert, dass die gewünschte Fahrdrahthöhe erreicht wird, wodurch eine fixe Verpressung des Seils in den Press-/Kerbhülsen bei der Erstmontage noch nicht erfolgen kann.

Bislang wurden deshalb die Hängerseile direkt hinter der Press-/Kerbhülse scharf in einem starken Winkel (>90°) abgeknickt, um ein Verrutschen zu verhindern, wodurch das Hängerseil stark beschädigt und die Lebensdauer stark reduziert wird, oder es werden mittels geschlitzter Schrauben die Hängerseile lösbar miteinander verpresst, wodurch die Hängerseile ebenfalls beschädigt wurden und dauerhaft keine hohe Auszugskraft erreicht werden konnte.

Die Erfindung hat zum Ziel, ohne Verpressung der Presshülse/Kerbhülse, eine ausreichend hohe Reibkraft zu erzeugen, so dass ein Zugbetrieb ermöglicht wird, ohne dass die Kontaktkräfte zwischen Pantograph und Fahrdraht ein Rutschen des Hängerseiles um die Kausche bewirken.

Erreicht wird dieses Ziel dadurch, dass zwischen der Press- oder Kerbhülse und der Kausche ein Bremsschuh verschiebbar angeordnet ist, der der Kausche angepasste Bremsflächen aufweist, so dass durch Verschieben des Bremsschuhs gegen die Kausche das Hängerseil zwischen Kausche und Bremsschuh eingeklemmt wird.

Durch die Erfindung wird es möglich, die Hängerseile vorläufig ohne Verpressung der Hülsen zu installieren, den Zugbetrieb aufzunehmen, und die Längen der Hängerseile im Betrieb beliebig oft auf die ideale Länge zu regulieren, so dass der Fahrdraht in der exakten Höhe fixiert wird. Sobald die Regulierungsarbeiten abgeschlossen sind, kann durch Verpressung der Press-/Kerbhülse die Länge der Hängerseile dauerhaft fixiert werden.

Um den Bremsschuh in der Bremsstellung zu sichern, kann er mit Noppen versehen werden, die in der Bremsstellung in Vertiefungen der Kausche einrasten. Es können auch die Noppen an der Kausche und die Vertiefungen am Bremsschuh angeordnet werden.

Zur Sicherung des Bremsschuhs in der Bremsstellung ist es auch möglich, dass der Bremsschuh und/oder die damit zusammenwirkenden Flächen der Kausche mit reibungserhöhenden Mitteln versehen werden. Diese Mittel könnten nach Art von bekannten Bremsbelägen ausgebildet sein.

Eine gute Betätigung wird erreicht, wenn der Bremsschuh mit Betätigungsvorsprüngen versehen wird.

Nachstehend ist die Erfindung anhand von in den Zeichnungen dargestellten Ausführungsbeispielen näher beschrieben, ohne auf diese Beispiele beschränkt zu sein. Dabei zeigen:
Figur 1 in schaubildlicher Ansicht die erfindungsgemäße Aufhängung eines Fahrdrahtes an einem Tragseil;
Figur 2 eine ebenfalls schaubildliche Ansicht von schräg unten des Bremsschuhs mit eingesetzter Kausche;
Figur 3 eine Ansicht von unten auf die Kausche;
Figur 4 einen Schnitt nach der Linie IV-IV in Figur 3;
Figur 5 eine schaubildliche Ansicht ähnlich der Figur 3 einer etwas abgeänderten Ausführungsform;
Figur 6 eine schaubildliche Ansicht schräg von unten einer weiteren Ausführungsform eines Bremsschuhs;
Figur 7 eine schaubildliche Ansicht schräg von oben des Bremsschuhs nach Figur 6.

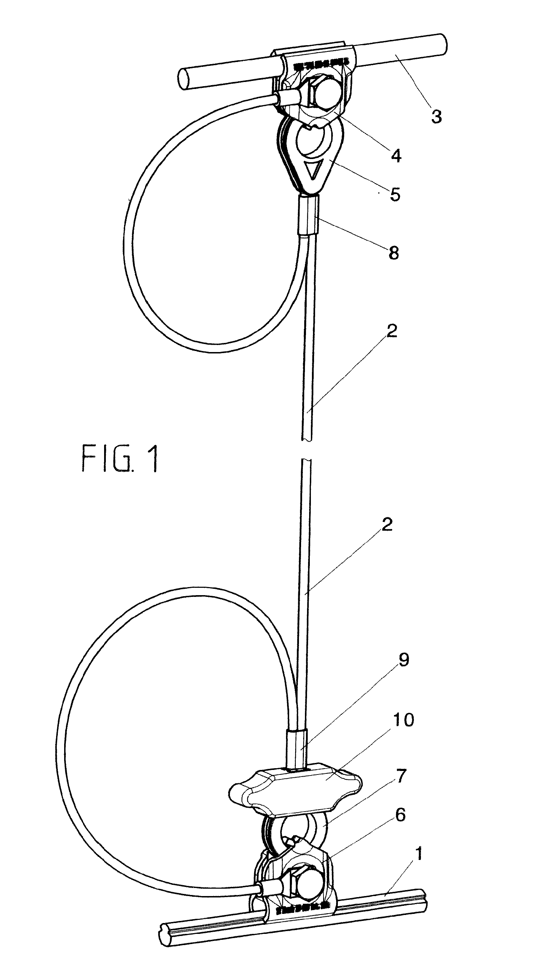

Gemäß Figur 1 ist ein Fahrdraht 1 mittels eines Hängerseils 2 an einem Tragseil 3 aufgehängt. Am Tragseil 3 erfolgt die Befestigung des Hängerseils 2 mit einer Hängeklemme 4 und einer Kausche 5. Die Befestigung des Hängerseils 2 an dem mit einer Längsrille versehenen Fahrdraht 1 erfolgt über eine Hängeklemme 6 und eine Kausche 7.

Das Hängerseil 2 ist sowohl beim Tragseil 3 als auch beim Fahrdraht 1 zur Bildung einer Schlinge durch eine Press- oder Kerbhülse 8 bzw. 9 und die Schlinge über die Kauschen 5 bzw. 7 geführt.

Die Enden des Hängerseils 2 sind mit den Hängeklemmen 4 bzw. 6 elektrisch leitend verbunden.

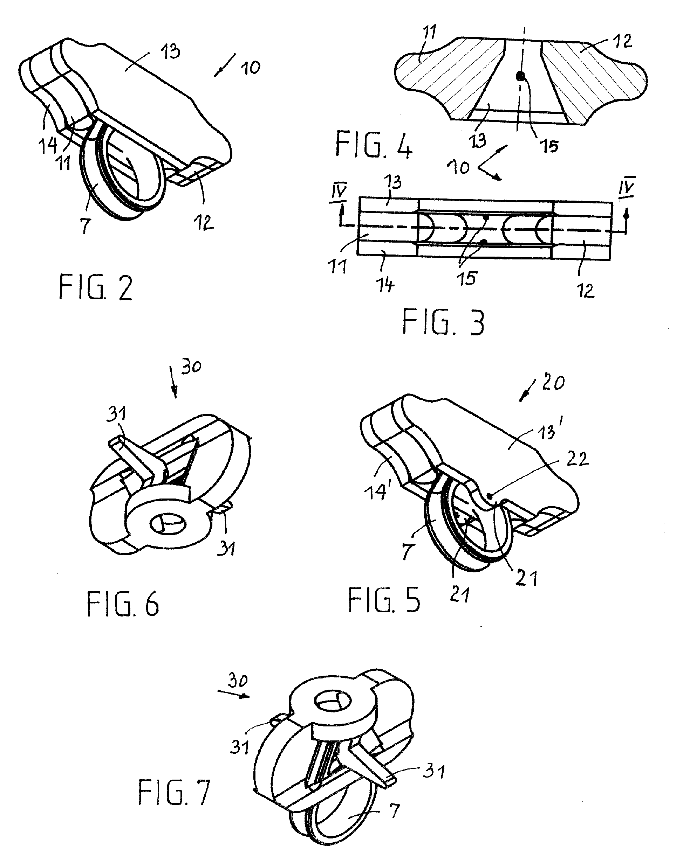

Zwischen der Press- oder Kerbhülse 9 und der Kausche 7 ist ein Bremsschuh 10 auf dem Hängerseil 2 verschiebbar angeordnet, dessen Aufbau besser aus den Figuren 2 bis 4 ersichtlich ist.

Der Bremsschuh 10 besteht aus vier miteinander verbundenen Teilen 11, 12 und 13, 14, wobei die Teile 11, 12 einen konischen Kanal für das Einsetzen der Kausche 7 bilden. Die Teile 13, 14 sind seitliche Abdeckplatten.

Die beiden Teile 13, 14 des Bremsschuhs 10 sind beim Ausführungsbeispiel mit Noppen 15 versehen, die in der eingeschobenen Bremsstellung des Bremsschuhs 10 in Vertiefungen (nicht dargestellt) der Kausche 7 einrasten. Wie bereits erwähnt, können die Noppen auch an der Kausche 7 und die Vertiefungen am Bremsschuh 10 angeordnet sein.

Wird der Bremsschuh 10 gegen die Kausche 7 verschoben, wird das Hängerseil 2 zwischen der Kausche 7 und dem Bremsschuh 10 eingeklemmt und damit fest mit der Kausche 7 verbunden.

Durch geringfügiges Lösen des Bremsschuhs 10 wird die Haltekraft des Hängerseiles 2 in der Kausche 7 so weit reduziert, dass die wirksame Länge des Hängerseils 2 verändert werden kann. Nach Erreichen der gewünschten Länge wird der Bremsschuh 10 wieder auf die Kausche 7 geschoben und der Druck auf das Hängerseil 2 derart erhöht, dass eine ausreichend hohe Sicherung gegen eine Längenänderung gegeben ist.

Es ist auch möglich, dass bei fixiertem Bremsschuh 10 die Länge des Hängerseils 2 durch Überwinden der Reibkraft durch entsprechend starkes Anziehen an einem Seilende eingestellt wird. Der Bremsschuh 10 muss dazu nicht verschoben werden.

In Figur 5 ist eine etwas abgeänderte Ausführungsform des Bremsschuhs 20 dargestellt. Im Gegensatz zum Bremsschuh 10 besitzen die Abdeckplatten 13' und 14' je einen Fortsatz 21 mit einer Bohrung 22. Durch die beiden Bohrungen 22 kann ein Stift durchgesteckt werden, durch den ein Herausfallen der Kausche 7 verhindert wird.

Der Bremsschuh 30 nach den Figuren 6 und 7 ist einteilig und besitzt zur besseren Handhabung Betätigungsvorsprünge 31.

Im Rahmen der Erfindung sind zahlreiche Abänderungen möglich. So könnte z.B. der Bremsschuh 10 auch bei der Kausche 5 angeordnet werden, so dass die Veränderung der Länge des Hängerseiles 2 vom Tragseil 3 her erfolgt.

## Patentansprüche

1. Anordnung zur Aufhängung eines Fahrdrahtes (1) elektrischer Bahnen mittels eines Hängerseils (2), das mittels wenigstens einer Hängeklemme (4, 6) und wenigstens einer Kausche (5, 7) den Fahrdraht (1) mit einem Tragseil (3) verbindet, wobei das Hängerseil (2) zur Bildung einer Schlinge durch eine Press- oder Kerbhülse (8, 9) und die Schlinge über die Kausche (5, 7) geführt ist, **dadurch gekennzeichnet, dass** zwischen der Press- oder Kerbhülse (9) und der Kausche (7) ein Bremsschuh (10, 20, 30) verschiebbar angeordnet ist, der der Kausche (7) angepasste Bremsflächen aufweist, so dass durch Verschieben des Bremsschuhs (10, 20, 30) gegen die Kausche (7) das Hängerseil (2) zwischen Kausche (7) und Bremsschuh (10, 20, 30) eingeklemmt wird.

2. Anordnung nach Anspruch 1, **dadurch gekennzeichnet, dass** der Bremsschuh (10) oder die Kausche (7) mit Noppen (15) oder dgl. versehen ist, die in der Bremsstellung in Vertiefungen der Kausche (7) oder des Bremsschuhs (10) einrasten.

3. Anordnung nach Anspruch 1 oder 2, **dadurch gekennzeichnet, dass** der Bremsschuh (10, 20, 30) und/oder die damit zusammenwirkenden Flächen der Kausche (7) mit reibungserhöhenden Mitteln versehen sind.

4. Anordnung nach Anspruch 1 oder 2, **dadurch gekennzeichnet, dass** der Bremsschuh (30) mit Betätigungsvorsprüngen (31) versehen ist.
